Europäisches Patentamt

European Patent Office

Office européen des brevets

(11) Veröffentlichungsnummer: **0 288 943**
**A2**

## EUROPÄISCHE PATENTANMELDUNG

(21) Anmeldenummer: 88106555.1

(51) Int. Cl.4: **C08G 59/14**

(22) Anmeldetag: 23.04.88

(30) Priorität: 28.04.87 AT 1048/87

(43) Veröffentlichungstag der Anmeldung:
02.11.88 Patentblatt 88/44

(84) Benannte Vertragsstaaten:
BE CH DE ES FR GB IT LI NL SE

(71) Anmelder: VIANOVA KUNSTHARZ
AKTIENGESELLSCHAFT
Postfach 191 Leechgasse 21
A-8011 Graz(AT)

(72) Erfinder: Kriessmann, Ingo, Dr.
Am Lindenhof 37
A-8043 Graz(AT)
Erfinder: Paar, Willibald, Dr.
Schanzelgasse 19
A-8010 Graz(AT)
Erfinder: Urbano, Edmund, Dr.
Grazer Strasse 34
A-8045 Graz(AT)

(74) Vertreter: Majcen, Hildegard, Dr.
Vianova Kunstharz AG Patentabteilung
Leechgasse 21 Postfach 191
A-8011 Graz(AT)

(54) Verfahren zur Herstellung von phosphorsäuremodifizierten Epoxidharzen.

(57) Die Erfindung betrifft ein Verfahren zur Herstellung von phosphorsäuremodifizierten Epoxidharzen, welche keine freien Säuregruppen aufweisen

Die Umsetzung der Phosphorsäure erfolgt in einer mehrstufigen Reaktion, wobei in der ersten Stufe die Orthophosphorsäure mit 2 Mol einer Monoepoxidverbindung oder eine Polyphosphorsäure mit n Phosphoratomen mit n-1 Mol eines Monoalkohols und anschließend mit n + 1 Mol einer Monoepoxidverbindung zum Diester umgesetzt wird. Die letzte Säuregruppe wird mit 1 Mol einer Di-oder Polyepoxidverbindung umgesetzt, wobei die Endprodukte eine Säurezahl von weniger als 5 mg KOH/g aufweisen.

## Verfahren zur Herstellung von phosphorsäuremodifizierten Epoxidharzen.

Die Erfindung betrifft ein Verfahren zur Herstellung von phosphorsäuremodifizierten Epoxidharzen, welche keine freien Säuregruppen aufweisen.

Aus der Literatur sind zahlreiche Beipsiele bekannt, in welchen die Umsetzung von Epoxidharzen mit Phosphorsäuren beschrieben wird. So wird in der US-PS 2,541,027 die Veresterung von Epoxidgruppen tragenden Ethern, insbesonders solchen auf der Basis von Bisphenol A, mit Orthophosphorsäure oder Monoalkyl-orthophosphaten beschrieben. Aus der US-PS 2,723,971 ist die Veresterung von Epoxidgruppen tragenden Copolymeren mit Phosphorsäuren bekannt. Addukte von Phosphorsäure an Glycidylether von Phenolen, die als Katalysator für die Vernetzungsreaktion von Polyhydroxypolyetherharzen mit Aminoplasten oder Phenoplasten dienen, sind in der US-PS-4,059,550 beschrieben. Wasserverdünnbaren Epoxidharz-Phosphorsäureester werden auch in der DE 27 57 733 beschrieben.

Alle diese Produkte sind durch einen Anteil an freien Säuregruppen gekennzeichnet, wodurch die Wasserlöslichkeit nach Salzbildung mit Basen gegeben ist.

Für viele Einsatzzwecke, insbesonders bei Kunstharzbindemitteln, die für das Verfahren der kathodischen Elektrobeschichtung entwickelt werden, ist die Gegenwart nennenswerter Anteile an freien Säuregruppen nicht zielführend. Es hat sich jedoch gezeigt, daß säuregruppenfreie Modifikationen von Epoxidharzen mit Phosphorsäure Vorteile bringen und damit überdies die Möglichkeit weitgehender Modifikationen der handelsüblichen Mono-, Di-oder Polyepoxidverbindungen bzw. -harze gegeben wird. Die gestellte Aufgabe, nämlich die Herstellung von phosphorsäuremodifizierten Epoxidharzen, welche praktisch frei von nichtveresterten Säuregruppen sind, wird erfindungsgemäß durch eine stufenweise Veresterung der Phosphorsäure gelöst.

Die Erfindung betrifft demgemäß ein Verfahren zur Herstellung von phosphorsäuremodifizierten Mono-, Di-oder Polyepoxidverbindungen oder -harzen, welche praktisch keine freien Säuregruppen aufweisen, welches dadurch gekennzeichnet ist, daß man

(A1) 1 Mol Orthophosphorsäure mit 2 Mol einer Monoepoxidverbindung oder

(A2) 1 Mol einer Polyphosphorsäure mit n P-Atomen mit n-1 Mol eines Monoalkohols mit mindestens 4 C-Atomen-und anschließend mit n + 1 Mol einer Monoepoxidverbindung umsetzt und

(B) die erhaltenen Diester bei 60 bis 130°C mit mindestens einer Oxirangruppe einer Di-oder Polyepoxidverbindung bis zu einer Säurezahl von weniger als 5, vorzugsweise von weniger als 3 mg KOH/g, reagiert, wobei die Menge der Di-oder Polyepoxidverbindung so gewählt wird, daß das Reaktionsprodukt ein Epoxidäquivalentgewicht von mindestens 1200 aufweist.

Das Verfahren stellt ein mehrstufiges Verfahren dar, bei welchem im Falle der Orthophosphorsäure der Phosphorsäurediester durch Reaktion mit Monoepoxiden, wie Alkylenoxiden, Alkylglycidylethern oder Alkylglycidylestern erhalten wird.

Bevorzugte Monoepoxidverbindungen sind dabei die Glycidylester von tert. Monocarbonsäuren, wie sie als KOCH-Säuren dem Fachmann bekannt sind. Die Umsetzung erfolgt, gegebenenfalls in einem aprotischen Lösemittel, wie Diethylenglykoldimethylether oder N-Methylpyrrolidon, durch Zugabe des Monoepoxids bei 30 bis 60°C und Reaktion bis zum Erreichen der berechneten Säurezahl bei 60 - 80°C. Vorteilhafterweise werden die in der handelsüblichen 85%igen Phosphorsäure enthaltenen Wasseranteile mit einer entsprechenden Menge Phosphorpentoxid zu Phosphorsäure umgesetzt.

Bei Verwendung von Polyphosphorsäuren (mit durchschnittlich 3 - 5 Phosphorsäureeinheiten) kann als erste Stufe eine Veresterung mit Monoalkoholen mit 4 oder mehr Kohlenstoffatomen erfolgen. Diese Reaktion erfolgt gegebenenfalls in Gegenwart eines reaktionsinerten Lösemittels bei 30 bis 70°C. Der dabei entstehende Anteil an freier Orthophosphorsäure wird gemeinsam mit dem Monoester mit dem Monoepoxid zum Diester umgesetzt, sodaß sich für den Diester bei n Phosphoratomen in der Polyphosphorsäure ein Anteil von n-1 Mol Monoalkohol und n + 1 Mol Monoepoxidverbindung ergibt.

Die Veresterung der letzten Säuregruppe erfolgt dann mit einer Di-oder Polyepoxidverbindung bei 60 bis 130°C bis zu einer Säurezahl von unter 5, vorzugsweise unter 3 mg KOH/g. Die Mengenverhältnisse werden dabei so gewählt, daß mindestens eine Epoxidgruppe der Epoxidverbindung verestert wird und das Reaktionsprodukt ein Epoxidäquivalentgewicht von mindestens 1200 aufweist. Die in dieser Stufe eingesetzten Di-oder Polyglycidylverbindungen, z. B. auf der Basis von Bisphenolen (Diphenylolalkanen), Polyalkylenglykolen, Dienpolymeren oder Phenolnovolaken sind dem Fachmann bekannt und im Handel in breiter Palette dem Verbraucher zugänglich.

Überraschenderweise werden durch diese stufenweise Reaktion sehr einheitliche Produkte erhalten, welche in üblicher Weise durch Reaktion mit Carboxylverbindungen in die Ester oder durch Amine in die Amin-Addukte oder quaternären Verbindungen umgesetzt werden können. Über die freigesetzten oder bereits vorhandenen Hydroxylgruppen können die modifizierten Epoxidverbindungen beispielsweise über Di- oder Polyisocyanatverbindungen oder Säureanhydride untereinander verknüpft oder in andere Oligomere oder Polymere eingebaut werden.

Auch ein Einbau basischer oder ungesättigter Gruppen über entsprechende Monoisocyanate ist möglich.

Überraschenderweise wird auch durch die Anwesenheit vollständig veresterter Phosphorsäuregruppen in den erfindungsgemäß hergestellten modifizierten Epoxidharzen die haftfestigkeit von Lackfilmen wesentlich verbessert. Bei kationischen Harzen, die unter Verwendung der erfindungsgemäß hergestellten modifizierten Epoxidharze durch Reaktion mit sek. oder primären Aminen oder durch Quaternierung mit tert. Amin/Säurekombinationen erhalten werden, ist neben der verbesserten Haftfestigkeit der Filme auch eine Erhöhung der Reaktivität bei Umurethanisierungen bzw. bei Umesterungen, sowie eine Verbesserung der Korrosionsfestigkeit der elektrisch abgeschiedenen Filme zu beobachten.

Die Erfindung betrifft demgemäß auch die Verwendung der nach diesen Verfahren hergestellten partiell modifizierten Di- oder Polyepoxidharze zur Herstellung von Epoxidharzestern oder Epoxid-Amin-Addukten.

Die nachfolgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Beispiel 1:

Zu 130 Tlen 2-Ethylhexanol werden unter Kühlen und Rühren langsam 84 Tle einer handelsüblichen Polyphosphorsäure (entsprechend ca. 3 Wasserstoffäquivalenten) zugegeben und bei 30 bis 40°C bis zu einer Säurezahl verestert, welche einem Gemisch von 75 % eines Monoesters und 25 % freier Orthophosphorsäure entspricht. Das eingesetzte Ethylhexanol (1 Mol) ist dabei zu 75 % durch die Veresterung verbraucht; der Rest von 25 % dient als Lösemittel.

Unter weiterem Kühlen werden dem Reaktionsprodukt 233 Tle 2-Ethylhexylglycidylether (1,25 Mol) innerhalb von 30 Minuten zugesetzt. Die Temperatur wird dabei langsam auf ca. 40°C gesteigert und nach Abklingen der Exothermie auf 70°C erhöht und so lange gehalten, bis die dem Diester entsprechende Säurezahl erreicht ist.

50 Tle dieses Reaktionsproduktes werden in 133 Tlen Diethylenglykoldimethylether gelöst und nach Zugabe von 238 Tlen eines Diepoxidharzes auf der Basis von Bisphenol A (Epoxidäquivalentgewicht EEW = 475) bei 70°C bis 100°C bis zu einer Säurezahl unter 5 mg KOH/g umgesetzt.

Das Produkt weist ein EEW von ca. 1300 auf und kann in üblicher Weise weiterverarbeitet werden.

Beispiel 2:

63 Tle einer handelsüblichen Orthophosphorsäure (85%ige Wäßrige Lösung) werden mit 35 Tlen Phosphorpentoxid zu 98 Tlen 100%iger Orthophosphorsäure (1 Mol) umgesetzt. Dann werden bei 30 bis 40°C dem Ansatz 500 Tle einer tert. $C_9$-$C_{11}$-Monocarbonsäureglycidylester (2 Mol) zugegeben und bis zur theoretischen Säurezahl des Phosphorsäurediesters (281 mg KOH/g) reagiert.

Die Veresterung der verbliebenen Säuregruppe erfolgt bei 90°C nach Zugabe einer Lösung von 950 Tlen eines Bisphenol-A-Diepoxidharzes (EEW - ca. 475; 1 Mol) in 920 Tlen Diethylenglykoldimethylether bis zu einer Säurezahl von weniger als 5 mg KOH/g. Das Produkt weist ein EEW von ca. 1550 auf.

**Ansprüche**

1. Verfahren zur Herstellung von phosphorsäuremodifizierten Mono-, Di oder Polyepoxidverbindungen oder -harzen, welche praktisch keine freien Säuregruppen aufweisen, dadurch gekennzeichnet, daß man

(A1) 1 Mol Orthophosphorsäure mit 2 Mol einer Monoepoxidverbindung oder

(A2) 1 Mol einer Polyphosphorsäure mit n P-Atomen mit n-1 Mol eines Monoalkohols mit mindestens 4 C-Atomen und anschließend mit n + 1 Mol einer Monoepoxidverbindung umsetzt und

(B) die erhaltenen Diester bei 60 bis 130°C mit mindestens einer Oxirangruppe einer Di- oder Polyepoxidverbindung bis zu einer Säurezahl von weniger als 5, vorzugsweise von weniger als 3 mg KOH/g, reagiert, wobei die Menge der Di- oder Polyepoxidverbindung so gewählt wird, daß das Reaktionsprodukt ein Epoxidäquivalentgewicht von mindestens 1200 aufweist.

2. Verfahren nach Anspruch 1, dadurch gekennzeichnet, daß man einen gegebenenfalls in der eingesetzten Phosphorsäure vorhandenen Wasseranteil mit der entsprechenden Menge Phosphorpentoxid in Orthophosphorsäure überführt.

3. Verfahren nach den Ansprüchen 1 und 2, dadurch gekennzeichnet, daß man als Monoepoxidverbindungen Alkylenoxide, Alkylglycidylether oder Alkylglycidylester, vorzugsweise die Glycidylester von tert. Monocarbonsäuren mit 9 bis 11 Kohlenstoffatomen einsetzt.

4. Verfahren nach den Ansprüchen 1 bis 3, dadurch gekennzeichnet, daß man zur Veresterung der dritten Säuregruppe Diepoxidharze auf Basis von Bisphenol A oder Polyepoxidharze auf Basis von Phenolnovolaken einsetzt.

5. Verwendung der nach den Ansprüchen 1 bis 4 hergestellten Epoxidverbindungen als Ausgangsstoffe für Ester oder Aminaddukte.